# EUROPEAN PATENT APPLICATION

(11) **EP 2 226 709 A2**
(43) Date of publication of application: **08.09.2010**
(21) Application number: 10250332.3
(22) Date of filing: 25.02.2010
(51) Int. Cl.: G06F 3/041, G06F 3/048

(54) **Control apparatus, control method, and control processing program**

(30) Priority: 04.03.2009 JP 2009050411
(71) Applicant: Brother Kogyo Kabushiki Kaisha, Nagoya-shi, Aichi-ken 467-8561 (JP)
(72) Inventor: Nakayama, Tomofumi, Nagoya-shi Aichi 467-8562 (JP)
(74) Representative: Smith, Samuel Leonard

(57) **Abstract**

A contact position is obtained from an input device. As an operation mode of a display device, a cleaning corresponding mode which disenables an operation corresponding to cleaning of a screen and using the input device on an object to be displayed on the screen is started. In the case where the operation mode is the cleaning corresponding mode, when the screen is touched, the color of a pixel in the screen corresponding to the contact position is changed to a predetermined color. When the number of pixels whose color is changed to the predetermined color becomes to a predetermined number or more, the cleaning corresponding mode is finished.

## Description

### Background of the Invention

### Field of the Invention

The present invention relates to the technical field of a control apparatus, a control method, and a control processing program for controlling an operation of a display device having input device such as a touch panel for entering the position on a screen by touching the screen.

### Discussion of Related Art

Conventionally, in a display device having a touch panel, an image and information obtained from the web can be displayed on a display screen. In a display device of this kind, the user can instruct an operation with the touch panel.

However, since an operation is performed by touching the touch panel with a finger or the like, dirt such as a fingerprint tends to be adhered. Consequently, the touch panel has to be frequently cleaned. A technique related to cleaning of a touch panel is disclosed in Japanese Patent Application Laid-Open (JP-A) No. 2007-26245. In the technique, when the "normal mode" is changed to "cleaning mode", an operation with a touch sensor is invalidated to facilitate cleaning. To make dirt easily found, the same color is displayed on the entire screen. With lapse of time, the color is sequentially changed to different colors.

### SUMMARY OF THE INVENTION

However, in the invention described in JP-A No. 2007-26245, a wiped place is not easily found at the time of cleaning, so that it is difficult for the user to efficiently perform cleaning.

The present invention has been achieved in consideration of the above, and an object of the invention is to provide a control apparatus, a control method, and a control process program enabling the user to efficiently clean a screen of a display device having an input device for entering a position on the screen by touching the screen.

In order to solve the above problem, one aspect of the present invention relates to a control apparatus for controlling an operation of a display device having an input device for inputting a touched position in a screen as a contact position, comprising:
a contact position obtaining device configured to obtain the contact position from the input device;
a cleaning-corresponding-mode starting device configured to start, as an operation mode of the display device, a cleaning corresponding mode which disenables an operation corresponding to cleaning of the screen and using the input device on an object to be displayed on the screen;
a color changing device configured to, in the case where the operation mode is the cleaning corresponding mode, when the screen is touched, change color of a pixel in the screen corresponding to the contact position to a predetermined color; and
a cleaning-corresponding-mode finishing device configured to finish the cleaning corresponding mode when the number of pixels whose color is changed to the predetermined color becomes to a predetermined number or larger.

Therefore, after the cleaning corresponding mode is started, when the user wipes the screen with a cleaning tool such as cloth, the color of the screen in the wiped part is changed to a predetermined color. It is consequently easy to visually recognize the wiped place. When an area of a certain size is wiped, the cleaning corresponding mode is finished. Thus, the user can clean the screen efficiently.

Further, in the above control apparatus, when the contact position obtaining device determines that the contact position moves on the screen while continuously obtaining the contact position, the color changing device changes the color of the pixel corresponding to the contact position to the predetermined color.

Therefore, only in the case where an action of moving a cleaning tool such as cloth while pressing it against the screen, that is, the action of "wiping" the screen is made, the color of the screen in the part where the action is made is changed to a predetermined color. Thus, the user can recognize the part in which the wiping action is made on the screen.

The above control apparatus further comprises:
a pressure information obtaining device configured to obtain pressure information corresponding to a pressure applied to the screen when the screen is touched,
wherein in the case where the pressure applied to the contact position is equal to or higher than a predetermined pressure on the basis of the pressure information obtained by the pressure information obtaining device, the color changing device changes the color of the pixel corresponding to the contact position to the predetermined color.

Therefore, only in the case where the cleaning tool such as cloth is pressed against the screen with a pressure of a certain degree or more, the color of the screen in the part changes to a predetermined color. Consequently, the user can recognize the part in which the cleaning tool is strongly pressed against the screen.

Further, in the above control apparatus, when the number of pixels corresponding to a range simultaneously touched on the screen is equal to or larger than a predetermined number on the basis of the contact position obtained by the contact position obtaining device, the color changing device changes the color of the pixel corresponding to the range to the predetermined color.

Therefore, only in the case where the cleaning tool touches the screen with an area of a certain size or more, the color of the screen in the part changes to a predetermined color. Consequently, the user can recognize the part in which the cleaning tool such as cloth having an area of a certain size and coming into contact with the surface to be cleaned is pressed against the screen.

The above control apparatus further comprises:
a use information storing device configured to store use information indicating at least one of history of using the input device and use time thereof; and
a device of setting the necessary number of passage times, which sets the necessary number of passage times on the screen on the basis of the stored use information,
wherein the color changing device counts the number of passage times of the contact position on each of the pixels by the movement, and changes the color of the pixel in which the number reaches the necessary number of passage times, to the predetermined color.

Therefore, since the degree of dirtiness of the screen changes according to use history and use time of the input device, the necessary number of passage times, that is, the number of wiping times necessary for the user is properly set according to the use history and the use time. Thus, dirt adhered to the screen can be removed reliably.

Further, in the above control apparatus, the color changing device changes the color of the pixel corresponding to the contact position to a color corresponding to the contact position in a predetermined image in place of the predetermined color.

Therefore, as cleaning of the screen progresses, a predetermined image appears on the screen, so that seasoning can be added to the cleaning of the screen.

Further, in the above control apparatus, the cleaning-corresponding-mode starting device starts the cleaning corresponding mode, and sets the color of the screen to a color different from the predetermined color, and
the color changing device changes the color of the pixel corresponding to the contact position from the different color to the predetermined color.

Therefore, the user can certainly distinguish between a wiped part and a part which is not wiped.

The above control apparatus further comprises:
a processing device configured to execute a process according to an operation using the input device when the operation mode is not the cleaning corresponding mode, and configured to invalidate the operation except for a change of the color of the pixel to the predetermined color in response to a touch in the screen when the operation mode is the cleaning corresponding mode.

Therefore, in the case where the control apparatus is an apparatus for executing a process according to an operation using the input device, when the user touches the screen with cloth or the like for cleaning in the cleaning corresponding mode, an unintended process can be prevented from being executed.

In order to solve the above problem, another aspect of the present invention relates to a control method of controlling an operation of a display device having an input device for inputting a touched position in a screen as a contact position, comprising:
a cleaning-corresponding-mode starting step of starting, as an operation mode of the display device, a cleaning corresponding mode which disenables an operation corresponding to cleaning of the screen and using the input device on an object to be displayed on the screen;
a color changing step of, in the case where the operation mode is the cleaning corresponding mode, obtaining the contact position from the input device, and when the screen is touched, changing color of a pixel in the screen corresponding to the contact position to a predetermined color; and
a cleaning-corresponding-mode finishing step of finishing the cleaning corresponding mode when the number of pixels whose color is changed to the predetermined color becomes to a predetermined number or larger.

In order to solve the above problem, still another aspect of the present invention relates to a control processing program for making a computer included in a control apparatus for controlling an operation of a display device having an input device for inputting a touched position in a screen as a contact position, function as:
a contact position obtaining device configured to obtain the contact position from the input device;
a cleaning-corresponding-mode starting device configured to start, as an operation mode of the display device, a cleaning corresponding mode which disenables an operation corresponding to cleaning of the screen and using the input device on an object to be displayed on the screen;
a color changing device configured to, in the case where the operation mode is the cleaning corresponding mode, when the screen is touched, change color of a pixel in the screen corresponding to the contact position to a predetermined color; and
a cleaning-corresponding-mode finishing device configured to finish the cleaning corresponding mode when the number of pixels whose color is changed to the predetermined color becomes to a predetermined number or larger.

According to the present invention, after the cleaning corresponding mode starts, the user wipes the screen with a cleaning tool such as cloth, the color of the screen of the wiped part changes to a predetermined color. Therefore, it is easy to visually recognize the wiped part. When an area of a certain size is wiped, the cleaning corresponding mode is finished, so that the user can clean the screen efficiently.

### Brief Description of the Drawings

FIG 1 is a block diagram showing an example of a schematic configuration of an information display terminal 1 according to an embodiment.
FIGS. 2A to 2D are diagrams showing an example of a state of change in screen display in a cleaning mode in an embodiment. FIG 2A shows screen display in "normal mode", FIG 2B shows screen display immediately after shift to "cleaning mode", FIG 2C shows screen display when color of a wiped portion changes to cleaning completion color, and FIG. 2D shows screen display when a predetermined area or more in the screen is wiped.
FIG 3 is a flowchart showing an example of processes executed by a CPU 11 in the information display terminal 1 according to an embodiment.
FIG 4 is a flowchart showing an example of process of determining the number of times of wiping executed by the CPU 11 in the information display terminal 1 according to an embodiment.

### Detailed Description of the Preferred Embodiments

Best embodiments of the present invention will be described below with reference to the drawings. The embodiments to be described below relate to the case of applying the invention to an information display terminal.

### 1. Configuration and the like of Information Display Terminal

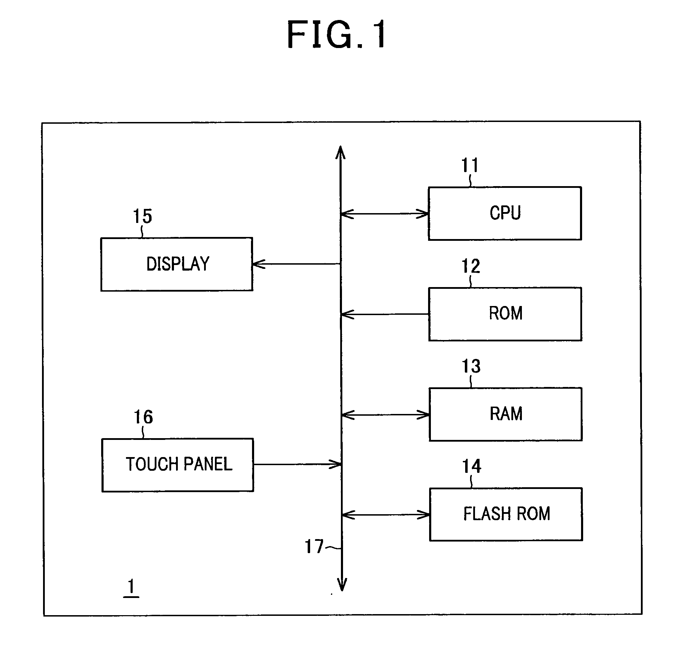

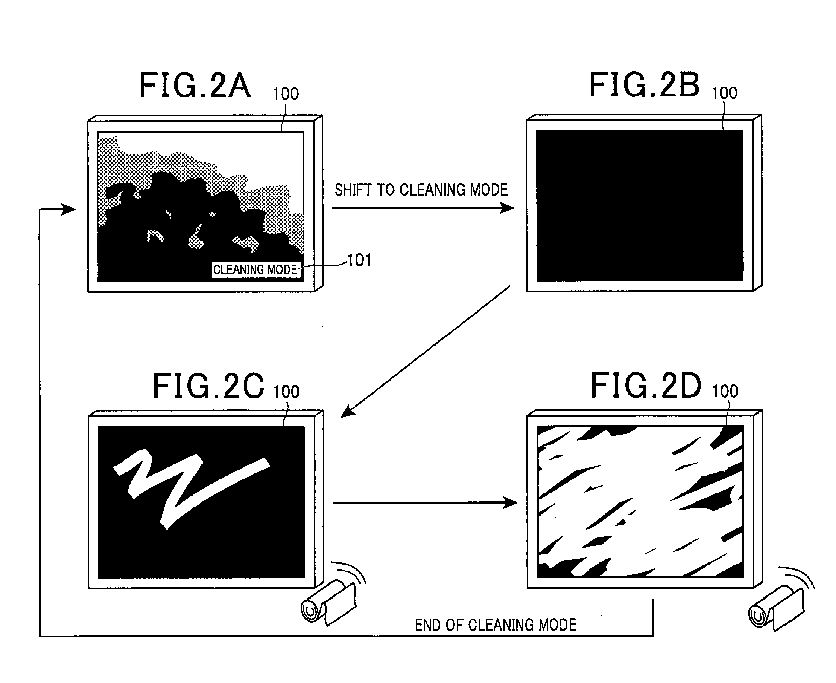

First, the configuration and function of an information display terminal 1 according to an embodiment of the invention will be described with reference to FIGS. 1 and 2.

As shown in FIG 1, the information display terminal 1 has a Central Processing Unit (CPU) 11 that controlling the entire information display terminal 1 in a centralized manner, a Read Only Memory (ROM) 12 storing firmware or the like, a Random Access Memory (RAM) 13 temporarily storing data necessary for control process of the CPU 11, a flash ROM 14 storing various control programs, data, and the like, a display 15 such as a liquid crystal display, and a touch panel 16 (an example of input device) employing, for example, pressure-sensitive type or capacitance type. The CPU 11 and the components are connected to each other via a bus 17.

The information display terminal 1 having such a configuration is a terminal device that displays data of an image or the like stored in the flash ROM 14 onto the screen of the display 15, and can be used as a digital photo frame.

As display modes of the display 15 (operation modes of the information display terminal 1), there are "normal mode" and "cleaning mode". In the "normal mode", button, icon, menu, or the like (an example of an object to be displayed) for entering an operation and information such as an image and document are displayed on the display 15. When the user operates the touch panel 16, a process according to the operation is executed by the CPU 11, and a result of the execution is a mode displayed on the display 15. On the other hand, the "cleaning mode" (an example of a mode corresponding cleaning) is a mode for the user to clean the touch panel 16.

The "cleaning mode" will be concretely described with reference to FIGS. 2A to 2D. In the "normal mode", for example, as shown in FIG. 2A, an image selected by the user is displayed on the screen. In the diagram, reference numeral 100 denotes screen display of the display 15. In the "normal mode", a "cleaning mode" button expressed by reference numeral 101 is displayed on the screen.

At this time, when the user touches a part in which the "cleaning mode" button is displayed in the screen via the touch panel 16, the mode shifts to the "cleaning mode". As shown in FIG. 2B, the entire screen changes to a color in which dirt such as a fingerprint is easily visibly recognized (in the following, called "initial color"). In the "cleaning mode", the user cannot perform normal operation using the touch panel 16. When a color whose brightness is sufficiently low (for example, black or the like) is used, dirt becomes more conspicuous, so that it is effective.

After shift to the "cleaning mode", when the user wipes the screen (the touch panel 16) with cloth or the like, as illustrated in FIG 2C, the color of the screen in the wiped part changes to a color different from the initial color (hereinbelow, called "cleaning completion color"). By the change in display, the part wiped by the user is recognized at a glance. As the cleaning completion color (an example of a predetermined color), for example, a color (such as white) whose brightness is sufficiently higher than that of the initial color is used. When a pressure-sensitive touch panel is employed as the touch panel 16, general cloth is sufficient as cloth used for cleaning. In the case where a touch panel of a capacitance type is employed, cloth made of a material having conductivity has to be used.

Although the color of the screen may change from the initial color to the cleaning completion color only after one wipe of the user, there is also a case that the color in a part changes after the part is wiped a plurality of times. The number of times required to change the initial color to the cleaning completion color (hereinbelow, called "the number of wiping times") depends on the operating time of the information display terminal 1 since cleaning of last time (since shift to the "cleaning mode" of last time) and the number of operating times of the information display terminal 1 (for example, the number of times the user touches the touch panel 16) since cleaning of last time. Concretely, the longer the operating time since cleaning of last time is, or the larger the number of operating times since cleaning of last time is, the more the dirt is adhered. Consequently, as the operating time becomes longer, the number of wiping times increases. As the number of operating times increases, the number of wiping times increases.

When the user continues wiping the screen and the area of the wiped part (the area of the part changed to the cleaning completion color) becomes a predetermined area or larger (FIG. 2D), the "cleaning mode" is finished and shifts to the "normal mode", and the apparatus returns to display the original screen (FIG 2A). At this time point, wiping cleaning of the user ends. It is also possible to finish the "cleaning mode" when the entire screen is wiped. However, it is difficult to completely wipe the screen, and it takes long time. Consequently, when the area corresponding to a certain ratio (for example, 80% or the like) of the area of the entire screen is wiped, the "cleaning mode" is finished. In reality, the area of the wiped part is calculated by pixel number conversion.

The touch panel 16 is constructed by attaching a panel unit formed by stacking a shield, a resistance film, a substrate, and the like so as to cover the screen of the display 15. When the user touches the panel unit, a plurality of contact positions can be detected simultaneously. Concretely, the touch panel 16 is obtained by, for example, forming a number of electrode patterns on a substrate, and a pressure applied to the panel by a touch of the user (in the case of a capacitance touch panel, a change in capacitance) is detected on the pixel unit basis of the screen of the display 15. The touch panel 16 outputs position information indicating a coordinate group in which pressure or a change in capacitance is detected to the CPU 11. In the following, the position in which pressure or a change in capacitance is detected will be called a "contact position".

In the ROM 12, a table for determining the number of wiping times is stored. In the table for determining the number of wiping times, the number of wiping times is set in correspondence with a set of operating time of the information display terminal 1 and the number of operation times. In the table for determining the number of wiping times, the longer the operating time is, the larger number of wiping times is set. The larger the number of operation times is the larger number of wiping times is set.

In the flash ROM 14, operating time information and information of the number of operation times (an example of use information) is stored. The operating time information is information indicating operating time of the information display terminal 1 since the cleaning of last time. The information of the number of operation times is information indicating the number of operation times of the information display terminal 1 since the cleaning of last time.

The CPU 11 reads and executes various programs (including the control process program of the invention) stored in the ROM 12, thereby controlling the operation of the information display terminal 1 in a centralized manner, and functions as contact position obtaining means, pressure information obtaining means, cleaning corresponding mode start means, color changing means, cleaning corresponding mode finishing means, and the like.

Concretely, the CPU 11 obtains the position information of the user operation output from the touch panel 16. In the "normal mode", the CPU 11 executes a process corresponding to the mode. More specifically, the CPU 11 displays image data, document data, and the like on the display 15 and displays a menu screen, a setting screen, and the like on the display 15. At this time, the CPU 11 displays the "cleaning mode" button as necessary. On the basis of position information of the user operation from the touch panel 16, the CPU 11 executes a process according to the screen operation of the user. For example, when the user touches a display position such as a button, icon, menu, or the like, the CPU 11 executes a process corresponding to the button, icon, or the like. When the user touches the screen during an image is displayed, the CPU 11 displays, for example, a predetermined menu. Further, as needed, the CPU 11 updates the operating time information and the information of the number of operating times stored in the flash ROM 14.

When the user touches the "cleaning mode" displayed on the screen, the CPU 11 shifts to the "cleaning mode". At this time, the CPU 11 controls the display 15 to change the color of the entire screen to the initial color, thereby erasing the button, icon, menu, image, and the like displayed until then so that a regular operation with the touch panel 16 cannot be performed. With reference to the table for determining the number of wiping times stored in the ROM 12, the CPU 11 determines the number of wiping times on the basis of the operating time information and the information of the number of operation times stored in the flash ROM 14. Further, the CPU 11 assures the area of a work table in the RAM 12. The work table is a table for recording the number of times of actually wiping the screen (hereinbelow, called "the number of wiping passage times") on the pixel unit basis. As the initial value, zero is set.

In the "cleaning mode", the CPU 11 recognizes coordinates of a wiped part in the screen on the basis of position information from the touch panel 16, and updates the number of wiping passage times corresponding to the coordinates. In the case where, while the position information from the touch panel 16 is successively obtained, the contact position indicated by the position information moves, the CPU 11 determines that the screen in the position is wiped. That is, since an action of making cloth or the like slid on the screen while being pressed against the screen is generally "wiping", the action is determined. When the cloth or the like is simply pressed against the screen, dirt on the screen is not easily removed. When the cloth or the like is moved on the screen, dirt is removed. Consequently, it is rational to determine the action as described above.

As a concrete method, for example, the CPU 11 obtains the position information output from the touch panel 16 at predetermined intervals. Each time the position information is obtained from the touch panel 16, the CPU 11 determines whether or not a pixel in which contact is newly detected (hereinbelow, called "pixel 1") exists in pixels adjacent to a region in which contact was detected in acquisition of last time (usually, a region corresponding to a plurality of pixels) exists or not. The CPU 11 also determines whether or not a pixel in which contact is detected this time (hereinbelow, called "pixel 2") exists in pixels in a region in which contact was detected in acquisition of last time. When the pixels 1 and 2 exist, the CPU 11 determines whether or not the contact position moves or not on the basis of the directions of the positions of the pixels 1 and 2 viewed from the center of gravity of the region in which contact is detected this time. On the other hand, when only the pixel 1 or 2 exists or when any of the pixels 1 and 2 does not exist, the CPU 11 determines that the contact position does not move.

Aspects of determining whether the screen is wiped or not more precisely will be described below.

In a first aspect, only in the case where pressure at the time of contact is predetermined pressure or more, it is determined that the screen in the contact position is wiped. If cloth or the like lightly touches the screen, dirt on the screen is not removed. Consequently, when cloth or the like pressed with a force of a certain degree or larger, it is determined the screen is wiped. As a concrete method, for example, the touch panel 16 outputs information indicating a pressure (an example of pressure information) so as to be associated with coordinates at which contact is detected together with position information to the CPU 11. On the basis of the position information, the CPU 11 makes determination. In the case where the touch panel 16 is a capacitance-type touch panel, a change amount from a reference value of capacitance corresponds to pressure. A threshold of pressure to be used for determination may be preliminarily determined at the designing stage of the information display terminal 1, for example, on the basis of whether dirt on the screen can be removed or not.

In a second aspect, only in the case where the area of a region in which contact is detected is predetermined area or larger, it is determined that the screen in the area is wiped. In the case of wiping the screen with cloth or the like, usually, a region in which the cloth or the like and the screen come into contact has an area of a certain degree. On the other hand, the case where the area of the region in which contact is detected is small may be, for example, the case where the screen is touched with a pen, a finger, or the like, or the screen is slightly touched by cloth or the like without any wiping intension. As a concrete method, for example, the CPU 11 calculates the number of pixels in which contact is detected on the basis of the position information from the touch panel 16. In the case where the number is equal to or larger than the number of pixels corresponding to the predetermined area, the CPU 11 determines that the pixels in which contact is detected are contacted. The threshold of an area used for determination may be preliminarily determined at a designing stage of the information display terminal 1 on the basis of average area of contact regions in the screen touched with a finger or the like and the minimum area of the contact region at the time of wiping the screen with cloth or the like.

The first and second aspects are more effectively when combined and applied.

In the case where the CPU 11 updates the work table and, by the updating, a pixel in which the number of wiping passage times becomes the number of wiping times or larger determined at the time of shift to the "cleaning mode" exists, the CPU 11 controls the display 15 to change the color of the corresponding pixel from the initial color to the cleaning completion color, and calculates the number of all of pixels whose color is changed to the cleaning completion color.

In the case where the number of all of pixels whose color is changed to the cleaning completion color reaches the predetermined number, the CPU 11 makes the display mode shift from the "cleaning mode" to the "normal mode". At this time, the CPU 11 controls the display 15 to reset the display of the screen to display just before shift to the "cleaning mode". The CPU 11 initializes the operating time information and the information of the number of operation times stored in the flash ROM 14.

### 2. Operation of Information Display Terminal

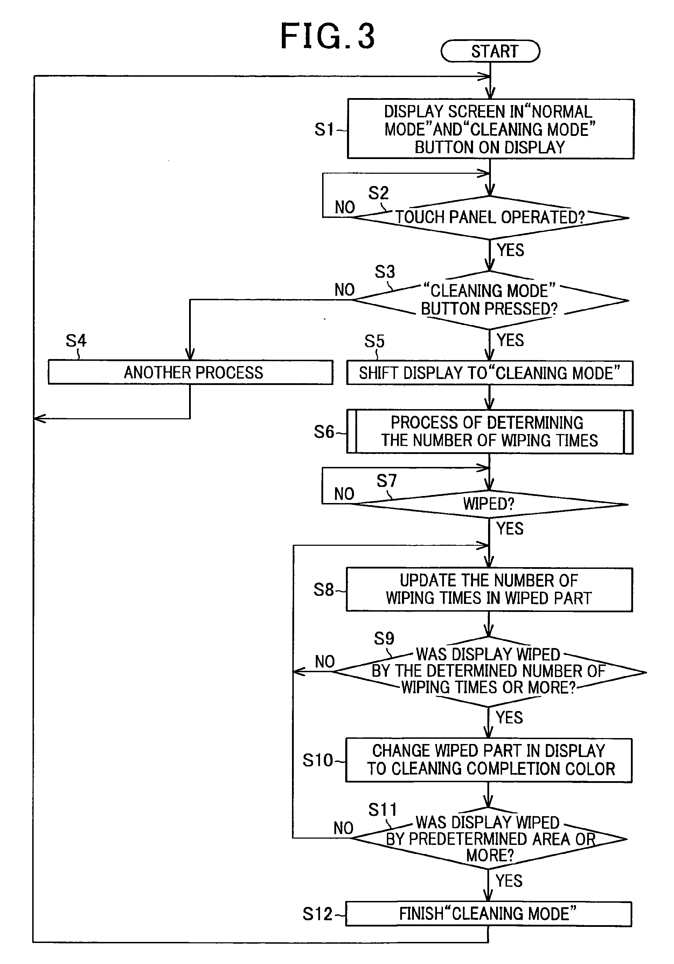

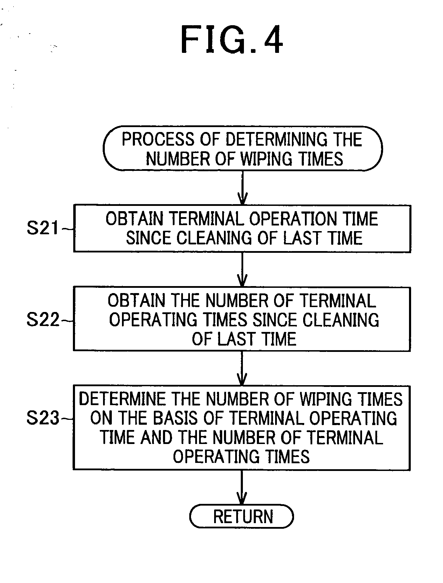

Next, referring to FIGS. 3 and 4, the operation of the information display terminal 1 according to the embodiment will be described.

The processes shown in FIG. 3 are started as the "normal mode", for example, after the power supply of the information display terminal 1 is turned on. First, the CPU 11 performs screen display in the "normal mode" ad displays the "cleaning mode" button on the screen (step S1). As the screen display in the "normal mode", for example, a predetermined menu, a setting screen, or the like is displayed, or an image or the like is displayed. Next, the CPU 11 determines whether any operation is performed on the touch panel 16 or not on the basis of the position information of the touch panel 16 (step S2). In the case where no operation is performed on the touch panel 16 (NO in step S2), the CPU 11 performs the same determination (step S2). In the case where an operation on the touch panel 16 is performed (YES in step S2), the CPU 11 moves to step S3. That is, the CPU 11 waits until some operation is performed.

Subsequently, the CPU 11 determines whether the "cleaning mode" button is pressed or not (whether the display position of the "cleaning mode" is touched by a finger of the user or the like or not) (step S3).

In the case where the "cleaning mode" button is not pressed (NO in step S3), it means that another operation is performed, so that the CPU 11 executes a process according to the operation (step S4). After completion of the process according to the operation, the CPU 11 shifts to step S1. At this time, a screen according to the process result in step S4 is displayed on the display 15.

On the other hand, when the "cleaning mode" button is pressed (YES in step S3), the CPU 11 changes the display mode to the "cleaning mode" (step S5). At this time, the CPU 11 changes the color of the entire screen to the initial color.

Subsequently, the CPU 11 executes a process of determining the number of wiping times (step S6). In the process of determining the number of wiping times, the CPU 11 obtains, as operating time since cleaning of last time, operating time information from the flash ROM 14 as shown in FIG 4 (step S21) and obtains, as the number of operation times since cleaning of last time, information of the number of operation times from the flash ROM 14 (step S22). The CPU 11 determines the number of wiping times on the basis of the operating time and the number of operation times with reference to the table for determining the number of wiping times (step S23).

After completion of the process, the CPU 11 finishes the process of determining the number of wiping times and determines whether wiping of the screen is performed or not on the basis of position information from the touch panel 16 (step S7). Concretely, the CPU 11 determines whether the contact position indicated by the position information is moved or not while successively obtaining the position information from the touch panel 16. In the case where wiping of the screen is not performed (NO in step S7), the CPU 11 performs the same determination (step S7). In the case where wiping of the screen is performed (YES in step S7), the CPU 11 shifts to step S8. That is, the CPU 11 waits until it detects that the wiping is performed.

Next, the CPU 11 updates the number of wiping passage times on the work table corresponding to the coordinates of a wiped position (step S8). The CPU 11 determines whether a part wiped by the number of wiping times determined by the process of determining the number of wiping times or larger has been increased by the updating of this time or not (step S9). In the case where the part wiped by the determined number of wiping times or larger has not been enlarged (NO in step S9), the CPU 11 shifts to step S8.

On the other hand, in the case where the part wiped by the determined number of wiping times or larger increases (YES in step S9), the CPU 11 changes the color of the pixels in the part to the cleaning completion color (step S10). Subsequently, the CPU 11 determines whether the screen has been wiped by the predetermined area or larger or not (whether the number of pixels whose color was changed from the initial color to the cleaning completion color more than the number of pixels corresponding to the predetermined area or not) (step S11). At this time, in the case where the screen is not wiped more than the predetermined area (NO in step S11), the CPU 11 moves to step S8.

On the other hand, when the screen is wiped more than the predetermined area (YES in step S11), the CPU 11 finishes the cleaning mode (step S 12) and shifts to step S1.

As described above, according to the embodiment, in the case where the CPU 11 obtains the position information output from the touch panel 16 and, on the basis of the position information, determines that the "cleaning mode" button is pressed, the CPU 11 changes the operation mode of the information display terminal 1 from the "normal mode" to the "cleaning mode". In the "cleaning mode", the CPU 11 changes the color of a pixel in the screen corresponding to the contact position indicated by the obtained position information to the cleaning completion color. When the number of pixels whose color is changed to the cleaning completion color becomes equal to or larger than the number corresponding to predetermined area, the CPU 11 changes the operation mode of the information display terminal 1 from the "cleaning mode" to the "normal mode".

Therefore, when the user wipes the screen with cloth or the like after shift to the "cleaning mode", the color of the screen in the wiped part changes to the cleaning completion color. It is easy to visually recognize the wiped place. When an area of a certain size is wiped, the "cleaning mode" is finished. Thus, the user can clean the screen efficiently.

In the case where the CPU 11 successively obtains position information from the touch panel 16 and determines that the contact position indicated by the position information has moved on the screen, the CPU 11 changes the color of pixels corresponding to the contact position to the cleaning completion color. Therefore, only in the case where the action of "wiping" the screen is made, the color of the screen in the part where the action is performed is changed to a predetermined color, so that the user can recognize the wiped part in the screen.

The CPU 11 sets the number of wiping times on the basis of the information of the number of operation times and the operating time information stored in the flash ROM 14, counts the number of times of passage on each pixel (the number of wiping passage times) on the basis of movement of the contact position indicated by the position information, and changes the color of the pixel in which the number of wiping passage times reaches the number of wiping numbers to the cleaning completion color. Therefore, the number of wiping times is properly set according to the degree of dirtiness of the screen proportional to the number of operation times and the operating time of the information display terminal 1, so that the dirt adhered to the screen can be removed with reliability.

The CPU 11 changes the operation mode of the information display terminal 1 to the "cleaning mode" and changes the color of the entire screen to the initial color different from the cleaning completion color. In the "cleaning mode", the CPU 11 changes the color of a pixel corresponding to the contact position from the initial color to the cleaning completion color. Therefore, the user can certainly distinguish the cleaned part and the part which is not cleaned from each other.

When the operation mode of the information display terminal 1 is the "normal mode", the CPU 11 executes a process according to an operation using the touch panel 16. When the operation mode of the information display terminal 1 is the "cleaning mode", the CPU 16 invalidates an operation using the touch panel 16 except for a change of a color of a pixel to the cleaning completion color when the screen is touched. Therefore, in the "cleaning mode", when the user touches the screen with cloth or the like for cleaning, an unintended process can be prevented from being executed.

Further, the touch panel 16 is constructed so that when the screen is touched, information indicating a pressure applied to the screen is output together with position information to the CPU 11. In the case where the pressure applied to the contact position is equal to or higher than a predetermined pressure on the basis of the information indicating the pressure and the position information, the CPU 11 changes the color of pixels corresponding to the contact position to the cleaning completion color. As a result, the user can recognize the part against which cloth or the like is pressed in the screen.

In the case there the number of pixels corresponding to a range simultaneously touched in the screen is equal to or larger than the number corresponding to a predetermined area on the basis of the position information, the CPU 11 changes the color of the pixels corresponding to the range to the cleaning completion color. In this arrangement, only in the case where a cleaning tool touches the screen in an area of a certain size, the color of the screen in the part changes to a predetermined color. Therefore, the user can recognize the part in the cleaning face touched by the cleaning tool having an area of a certain size such as cloth.

In the foregoing embodiment, the initial color is set to a color by which dirt adhered to the screen becomes conspicuous is used. However, the cleaning completion color may be set to a color by which dirt becomes conspicuous (such as black). In this aspect, the user can easily recognize whether the dirt in the wiped part was removed or not.

In place of changing the color of a wiped part in the screen to the cleaning completion color, for example, it is also possible to gradually display an image on the basis of image data or the like stored in the flash ROM 14 and, when the entire screen is wiped, display the entire image. Concretely, the CPU 11 converts coordinates of pixels in a wiped part to coordinates on the image and obtains color information of a position corresponding to the wiped part. The CPU 11 changes the color of the pixel in the wiped part to the color indicated by the obtained color information. In this aspect, the user can do the cleaning while enjoying an image which is appearing.

It is not an essential condition to change the color of the screen to the initial color at the shift to the "cleaning mode". It is sufficient that the user can distinguish a wiped part and a not-wiped part from each other on the screen. For example, while maintaining display before shift to the "cleaning mode" in a not-wiped part in the screen, the color of a wiped part may e changed to the cleaning completion color. In this case, also in the "cleaning mode", a button, an icon, a menu, and the like are displayed. However, an operation on those things is ignored (a process corresponding to an object displayed in a touched position is not executed). Only the color of the wiped part is changed to the cleaning completion color.

In the foregoing embodiment, the number of wiping times is determined on the basis of the operating time and the number of operation times of the information display terminal 1. However, the number of wiping times may be determined on the basis of one of them or may be determined in advance as a fixed value.

In the embodiment, to precisely detect the action of "wiping", while sequentially obtaining position information from the touch panel 16, when the contact position indicated by the position information moves on the screen, the color of a pixel corresponding to the contact position is changed to the cleaning completion color. If precision is not required, a simpler method may be employed. That is, a position of touch detected by the touch panel 16 may be simply determined as a wiped position.

In the foregoing embodiment, a process corresponding to an operation using a touch panel is executed by the information display terminal 1 itself (CPU 11) and, on the basis of a result of the process or the like, displaying operation of the display is performed. For example, the invention can be also applied to a display with a touch panel dedicated to input/display, which is used for operating an information processing apparatus such as a personal computer and displays a video image output from the information processing apparatus. In this case, for example, in the "normal mode", the CPU of the display controls the display panel so as to display a video image corresponding to a video signal output from the information processing apparatus, and the "cleaning mode" button is displayed (a button may be provided for the display body). The CPU outputs position information from the touch panel to the information processing apparatus. At this time, by converting position information from the touch panel to position information indicating a part in the screen and outputting the resultant position information, a general information processing apparatus can handle it. Alternatively, it is also possible to output position information from the touch panel as it is and convert the position information on the information processing apparatus side by a driver program for a touch panel.

On the other hand, in the "cleaning mode", for example, the CPU does not use a video signal output from an information processing apparatus for screen display, and does not output position information from the touch panel to the information processing apparatus. By the operation, the normal screen operation by the user cannot be performed. In a manner similar to the foregoing embodiment, the CPU changes the color of the wiped part in the screen from the initial color to the cleaning completion color on the basis of the position information from the touch panel.

In the aspect of the display with the touch panel dedicated to input/display, by an application program (corresponding to the control process program of the present invention) installed in the information processing apparatus, the CPU of the information processing apparatus may control of switch between the "normal mode" and the "cleaning mode". For example, the application program may be recorded on a recording medium such as a CD-ROM and loaded to the information processing apparatus by a drive device, or may be downloaded from a predetermined server apparatus via a network.

## Claims

1. A control apparatus for controlling an operation of a display device having an input device for inputting a touched position in a screen as a contact position, comprising:
a contact position obtaining device configured to obtain the contact position from the input device;
a cleaning-corresponding-mode starting device configured to start, as an operation mode of the display device, a cleaning corresponding mode which disenables an operation corresponding to cleaning of the screen and using the input device on an object to be displayed on the screen;
a color changing device configured to, in the case where the operation mode is the cleaning corresponding mode, when the screen is touched, change color of a pixel in the screen corresponding to the contact position to a predetermined color; and
a cleaning-corresponding-mode finishing device configured to finish the cleaning corresponding mode when the number of pixels whose color is changed to the predetermined color becomes to a predetermined number or larger.

2. The control apparatus according to claim 1,
wherein when the contact position obtaining device determines that the contact position moves on the screen while continuously obtaining the contact position, the color changing device changes the color of the pixel corresponding to the contact position to the predetermined color.

3. The control apparatus according to claim 2, further comprising:
a use information storing device configured to store use information indicating at least one of history of using the input device and use time thereof; and
a device of setting the necessary number of passage times, which sets the necessary number of passage times on the screen on the basis of the stored use information,
wherein the color changing device counts the number of passage times of the contact position on each of the pixels by the movement, and changes the color of the pixel in which the number reaches the necessary number of passage times, to the predetermined color.

4. The control apparatus according to claim 1, 2 or 3, further comprising:
a pressure information obtaining device configured to obtain pressure information corresponding to a pressure applied to the screen when the screen is touched,
wherein in the case where the pressure applied to the contact position is equal to or higher than a predetermined pressure on the basis of the pressure information obtained by the pressure information obtaining device, the color changing device changes the color of the pixel corresponding to the contact position to the predetermined color.

5. The control apparatus according to claim 1, 2, 3 or 4,
wherein when the number of pixels corresponding to a range simultaneously touched on the screen is equal to or larger than a predetermined number on the basis of the contact position obtained by the contact position obtaining device, the color changing device changes the color of the pixel corresponding to the range to the predetermined color.

6. The control apparatus according to any preceding claim,
wherein the color changing device changes the color of the pixel corresponding to the contact position to a color corresponding to the contact position in a predetermined image in place of the predetermined color.

7. The control apparatus according to any preceding claim,
wherein the cleaning-corresponding-mode starting device starts the cleaning corresponding mode, and sets the color of the screen to a color different from the predetermined color, and
the color changing device changes the color of the pixel corresponding to the contact position from the different color to the predetermined color.

8. The control apparatus according to any preceding claim, further comprising:
a processing device configured to execute a process according to an operation using the input device when the operation mode is not the cleaning corresponding mode, and configured to invalidate the operation except for a change of the color of the pixel to the predetermined color in response to a touch in the screen when the operation mode is the cleaning corresponding mode.

9. A control method of controlling an operation of a display device having an input device for inputting a touched position in a screen as a contact position, comprising:
a cleaning-corresponding-mode starting step of starting, as an operation mode of the display device, a cleaning corresponding mode which disenables an operation corresponding to cleaning of the screen and using the input device on an object to be displayed on the screen;
a color changing step of, in the case where the operation mode is the cleaning corresponding mode, obtaining the contact position from the input device, and when the screen is touched, changing color of a pixel in the screen corresponding to the contact position to a predetermined color; and
a cleaning-corresponding-mode finishing step of finishing the cleaning corresponding mode when the number of pixels whose color is changed to the predetermined color becomes to a predetermined number or larger.

10. A control processing program for making a computer included in a control apparatus for controlling an operation of a display device having an input device for inputting a touched position in a screen as a contact position, function as:
a contact position obtaining device configured to obtain the contact position from the input device;
a cleaning-corresponding-mode starting device configured to start, as an operation mode of the display device, a cleaning corresponding mode which disenables an operation corresponding to cleaning of the screen and using the input device on an object to be displayed on the screen;
a color changing device configured to, in the case where the operation mode is the cleaning corresponding mode, when the screen is touched, change color of a pixel in the screen corresponding to the contact position to a predetermined color; and
a cleaning-corresponding-mode finishing device configured to finish the cleaning corresponding mode when the number of pixels whose color is changed to the predetermined color becomes to a predetermined number or larger.
